# EUROPÄISCHE PATENTSCHRIFT

(11) **EP 3 243 009 B1**
(45) Veröffentlichungstag und Bekanntmachung des Hinweises auf die Patenterteilung: **31.10.2018**
(21) Anmeldenummer: 15828815.9
(22) Anmeldetag: 10.12.2015
(51) Int. Cl.: F16D 48/06

(54) **VERFAHREN ZUR ERMITTLUNG EINES TASTPUNKTES EINER HYBRIDTRENNKUPPLUNG EINES HYBRIDFAHRZEUGES**
METHOD FOR DETERMINING A BITE POINT OF A HYBRID CLUTCH IN A HYBRID VEHICLE
PROCÉDÉ PERMETTANT DE DÉTERMINER UN POINT DE CONTACT D'UN EMBRAYAGE DE COUPURE HYBRIDE D'UN VÉHICULE HYBRIDE

(30) Priorität: 08.01.2015 DE 102015200108
(43) Veröffentlichungstag der Anmeldung: 15.11.2017
(73) Patentinhaber: Schaeffler Technologies AG & Co. KG, 91074 Herzogenaurach (DE)
(72) Erfinder: LIENHARD, Markus, 76135 Karlsruhe (DE)
(86) Internationale Anmeldenummer: PCT/DE2015/200534
(87) Internationale Veröffentlichungsnummer: WO 2016/110284

(56) Entgegenhaltungen:
- WO-A1-2011/134451
- WO-A2-03/006841
- DE-A1-102008 001 140
- DE-A1-102013 104 747

## Beschreibung

Die Erfindung betrifft ein Verfahren zur Ermittlung eines Tastpunktes einer Hybridtrennkupplung eines Hybridfahrzeuges, welche von einem hydrostatischen Kupplungsaktor betätigt wird, wobei die Hybridtrennkupplung einen Verbrennungsmotor und einen Elektromotor trennt oder verbindet und der Tastpunkt durch langsames Betätigen der Hybridtrennkupplung, ausgehend von einer trennenden Position der Hybridtrennkupplung, welche diese in einem unbetätigten Zustand einnimmt, bei einer definierten Momentenreaktion des Elektromotors detektiert wird.

Die DE 10 2010 024 941 A1 offenbart ein Verfahren zur Steuerung eines Doppelkupplungsgetriebes mit mindestens zwei Teilantriebssträngen, von denen jeder mittels einer Kupplung mit einer Brennkraftmaschine koppelbar ist. Im Fahrbetrieb des, das Doppelkupplungsgetriebe umfassenden Fahrzeuges wird ein Tastpunkt der Kupplung unabhängig vom Motormoment ermittelt. Dieser Tastpunkt wird dabei während der Inbetriebnahme des Fahrzeuges bestimmt und dann während des Betriebes des Fahrzeuges adaptiert.

Bei einem Hybridfahrzeug mit hybridischem Antriebsstrang kann der Fahrwiderstand aus zwei unabhängigen Energiequellen, wie Kraftstoff eines Verbrennungsmotors und elektrische Energie aus einer Traktionsbatterie eines Elektromotors durch Umwandlung in mechanische Energie überwunden werden. Gemäß der DE 10 2008 030 473 A1 ist ein Verfahren zur Tastpunktermittlung einer automatisierten Hybridtrennkupplung in einem Hybridantriebsstrang bekannt. Der Tastpunkt der Hybridtrennkupplung, welche zwischen einem Verbrennungsmotor und einem Elektrotraktionsantrieb angeordnet ist, wird bei stillgesetztem Verbrennungsmotor bestimmt, indem die Hybridtrennkupplung langsam geschlossen wird und der Einfluss der sich schließenden Hybridtrennkupplung auf eine Elektromaschine des Elektrotraktionsantriebes, die mit einer vorgegebenen Drehzahl rotiert, ausgewertet wird.

Die Qualität der Tastpunktbestimmung hängt dabei stark von der Qualität eines verwendeten Reglers des Elektromotors ab, da einzig und allein auf die Reaktion des verwendeten Drehzahlreglers des Elektromotors geachtet wird. Dies bedeutet, dass alle Schwächen des Reglers, wie Reaktionszeit, Überschwingungen, Schwingungsverhalten, durch Anpassung der Adaptionsroutine bereinigt werden müssen. Aus diesem Grund sind Wartezeiten vorgesehen, bis der Regler des Elektromotors seinen stationären Zustand erreicht hat. Darüber hinaus regen Drehzahlregler häufig Schwingungen unterschiedlicher Frequenzen an. Um diese zu eliminieren, muss das Momentensignal gefiltert werden, was die Tastpunktbestimmung zusätzlich verlangsamt, da das Einschwingen des Filters ebenfalls Zeit benötigt.

Aus der WO 2003/006841 A2 ist ein Verfahren zur Tastpunktermittlung einer Hybridtrennkupplung bekannt, bei dem eine Tastpunktermittlung bei einem stillgesetzten Verbrennungsmotor und bei einer gemeinsamen Betrachtung des Verbrennungsmotors und einer Elektromaschine durchgeführt wird.

Bezüglich weiteren Standes der Technik wird auf die DE 10 2008 001 140 A1, die WO 2011/134451 A1 und die DE 10 2013 104 747 A1 verwiesen.

Der Erfindung liegt die Aufgabe zugrunde, ein Verfahren zur Ermittlung eines Tastpunktes einer Hybridtrennkupplung anzugeben, bei welcher zum Einpegeln einer Elektronik vorgesehene Wartezeiten reduziert werden und trotzdem die Qualität des ermittelten Tastpunktes erhöht wird.

Erfindungsgemäß wird die Aufgabe dadurch gelöst, dass der Tastpunkt bei laufendem Verbrennungsmotor und unbewegtem Elektromotor adaptiert wird und die Momentenreaktion des Elektromotors mit einer Momentenreaktion des Verbrennungsmotors validiert wird. Dies hat den Vorteil, dass Wartezeiten verkürzt werden können, da eine Momentenreaktion des Verbrennungsmotors schneller ermittelt werden kann und nicht erst abgewartet werden muss, bis der Elektromotor seinen stationären Zustand erreicht hat. Darüber hinaus wird die Qualität des Tastpunktes hinsichtlich Genauigkeit, Geschwindigkeit der Bestimmung und Reproduzierbarkeit wesentlich erhöht.

Vorteilhafterweise wird der Elektromotor im Stillstand drehzahlgeregelt. Dadurch, dass der Elektromotor nicht gestartet werden muss, ist eine Zeiteinsparung bei der Tastpunktermittlung möglich, da sofort mit dem Adaptionsvorgang begonnen werden kann. Die Zeitdauer lässt sich deutlich verkürzen, da der stehende Elektromotor nicht auf eine Drehzahl für die Drehzahlregelung beschleunigt werden muss, weswegen die Tastpunktadaption nicht mehr angehalten werden muss.

In einer Ausgestaltung wird der Verbrennungsmotor auf eine Leerlaufdrehzahl geregelt. Durch die bei laufendem Verbrennungsmotor entstehenden Vibrationen werden Reibungen im System unterbunden, so dass der Tastpunkt sich besser bestimmen lässt.

In einer Ausführungsform ist während der Adaption des Tastpunktes der Verbrennungsmotor von dem Antriebsstrang abgekoppelt. Somit befindet sich das Fahrzeug im Stillstand, wodurch sichergestellt wird, dass Vibrationen des Antriebsstranges zu keiner Verzerrung des Tastpunktes führen.

In einer Variante wird zur Adaption des Tastpunktes während eines Betriebes des Hybridfahrzeuges eine Inbetriebnahmeroutine genutzt, mit welcher ein erster Tastpunkt bei einer Inbetriebnahme des Hybridfahrzeuges ermittelt wird, wobei die Hybridtrennkupplung nah an einem vorhergehend bestimmten Tastpunkt herangefahren wird und die Hybridtrennkupplung ausgehend von diesem vorhergehend bestimmten Tastpunkt weiter verschoben wird, bis die definierte Momentenreaktion detektiert wird. Dies hat den Vorteil, dass bei der Adaption des Tastpunktes während des Fahrbetriebes des Hybridfahrzeuges der Adaptionsvorgang wesentlich verkürzt werden kann, da ein vorhergehend bestimmter Tastpunkt der Tastpunktadaption zugrunde gelegt wird. Der aktuelle Tastpunkt kann somit wesentlich schneller bestimmt werden.

In einer Variante wird während der Inbetriebnahme des Hybridfahrzeuges mit der Inbetriebnahmeroutine der erste Tastpunkt der Hybridtrennkupplung ermittelt, welcher bei einer ersten Adaption zur Bestimmung des aktuellen Tastpunktes während des Betriebes des Hybridfahrzeuges als vorhergehend bestimmter Tastpunkt zugrunde gelegt wird. Durch diesen, während der Inbetriebnahme des Hybridfahrzeuges ermittelten ersten Tastpunkt ist der Bereich, in welchem eine Tastpunktverschiebung vermutet wird, bereits bekannt, so dass die Hybridtrennkupplung in der Adaptionsphase in diesem Bereich verfahren werden kann und somit die Zeitdauer zur Bestimmung des aktuellen Tastpunktes verkürzt wird.

In einer Weiterbildung wird als vorhergehend bestimmter Tastpunkt der zuletzt bestimmte Tastpunkt verwendet, welcher in der, der aktuellen Adaptionsphase unmittelbar vorausgehenden Adaptionsphase bestimmt wurde. Auch bei dieser Vorgehensweise wird durch die Verwendung des, bei der unmittelbar vorhergehenden Adaptionsphase ermittelten Tastpunktes ein sehr schnelles Heranfahren an einen möglichen aktuellen Tastpunkt gewährleistet, wodurch die Zeit zur Ermittlung des aktuellen Tastpunktes reduziert wird.

In einer weiteren Ausführungsform wird als Momentenreaktion eine Momentenerhöhung überwacht, wobei auf die definierte Momentenerhöhung geschlossen wird, wenn ein vorgegebener Schwellwert der Momentenerhöhung überschritten wird. Durch das Nutzen des Schwellwertes lässt sich eine besonders genaue Bestimmung des Tastpunktmomentes realisieren, weshalb der adaptierte aktuelle Tastpunkt genau ermittelt werden kann.

Die Erfindung lässt zahlreiche Ausführungsformen zu. Eine davon soll anhand der in der Zeichnung dargestellten Figur näher erläutert werden.

Es zeigt:

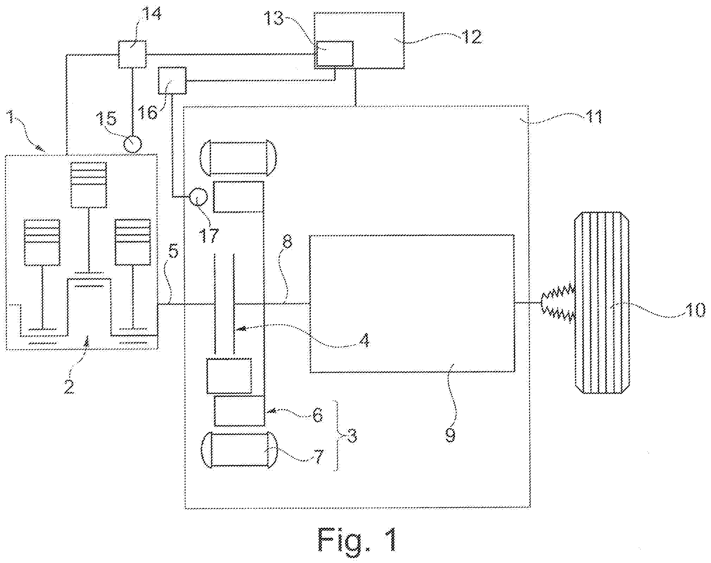

- Fig. 1:: eine Prinzipdarstellung eines Hybridantriebes eines Hybridfahrzeuges.

In Fig. 1 ist eine Prinzipdarstellung eines Antriebsstranges 1 eines Hybridfahrzeuges dargestellt. Dieser Antriebsstrang 1 umfasst einen Verbrennungsmotor 2 und einen Elektromotor 3. Zwischen dem Verbrennungsmotor 2 und dem Elektromotor 3 ist direkt hinter dem Verbrennungsmotor 2 eine Hybridtrennkupplung 4 angeordnet. Verbrennungsmotor 2 und Hybridtrennkupplung 4 sind über eine Kurbelwelle 5 miteinander verbunden. Der Elektromotor 3 weist einen drehbaren Rotor 6 und einen feststehenden Stator 7 auf. Die Abtriebswelle 8 der Hybridtrennkupplung 4 ist mit einem Getriebe verbunden, welches ein nicht weiter dargestelltes Koppelelement, beispielsweise eine zweite Kupplung oder einen Drehmomentwandler enthält, das zwischen dem Elektromotor 3 und dem Getriebe 9 angeordnet ist. Das Getriebe 9 überträgt das von dem Verbrennungsmotor 2 und/oder dem Elektromotor 3 erzeugte Drehmoment auf die Antriebsräder 10 des Hybridfahrzeuges. Die Hybridtrennkupplung 4 und das Getriebe 9 bilden dabei ein Getriebesystem 11, welches von einem hydrostatischen Kupplungsaktor 12 angesteuert wird, welcher in Kombination mit der unbetätigt geschlossenen Hybridtrennkupplung 4 verwendet wird. Die Hybridtrennkupplung 4 wird durch den hydrostatischen Kupplungsaktor 12 über eine hydrostatische Strecke betätigt.

Der hydrostatische Kupplungsaktor 12 umfasst ein Steuergerät 13, welches mit einem Leerlaufregler 14 des Verbrennungsmotors 1 verbunden ist, an welchen ein, die Drehzahl des Verbrennungsmotors 1 detektierender erster Drehzahlsensor 15 führt. Des Weiteren ist das Steuergerät 13 mit einem Drehzahlregler 16 des Elektromotors 3 verbunden, welcher ebenfalls von einem zweiten Drehzahlsensor 17, der dem Rotor 6 des Elektromotors 3 gegenüberliegt, mit entsprechendem Drehzahlen des Elektromotors 3 versorgt wird.

Der Tastpunkt ist von besonderer Bedeutung für die Steuerung der Hybridtrennkupplung 4 und wird somit während der Erstinbetriebnahme des Fahrzeuges bestimmt. Die Adaption des Tastpunktes erfolgt bei sich drehendem Verbrennungsmotor 2, welcher in einer Leerlaufdrehzahl läuft, während des Betriebes des Fahrzeuges. Dabei befindet sich das Fahrzeug im Stillstand. Zur Tastpunktermittlung wird die Hybridtrennkupplung 4 langsam geschlossen und der Elektromotor 3 über den Drehzahlregler 16 auf 0 Umdrehungen geregelt. Durch langsames Schließen der Hybridtrennkupplung 4 baut diese entsprechend langsam ein Moment auf und überträgt Moment vom Verbrennungsmotor zum Elektromotor 3. Der Leerlaufregler 14 des Verbrennungsmotors 2 auf der Verbrennungsmotorseite und der Drehzahlregler 16 auf der Seite des Elektromotors 3 werden aktiv und erhöhen jeweils ihr Moment, um die eingestellte Drehzahl bei zu behalten. Dabei wird die Momentenänderung des Verbrennungsmotors 1 zur Validierung der von dem Elektromotor 2 angegebenen Momentenänderung genutzt.

Zu dem Zeitpunkt, an welchem die Hybridtrennkupplung 4 beginnt ein Moment zu übertragen, wird der Elektromotor 3 leicht mitgeschleppt. Aufgrund der, an dem Elektromotor 3 anliegenden Drehzahlregelung steigt das Moment des Elektromotors 3 an. Bei Vorliegen einer definierten Momentenerhöhung wird der aktuelle Tastpunkt erfasst. Da der Elektromotor 3 zu Beginn der Tastpunktermittlung nicht dreht, werden Drehzahleinbrüche zuverlässig verhindert.

Bei der erstmaligen Inbetriebnahme des Hybridfahrzeuges wird eine Inbetriebnahme zur Feststellung des ersten Tastpunktes initiiert. Durch das Schließen der Hybridtrennkupplung 4 wird das Moment des Elektromotors 3 erhöht. Die Hybridtrennkupplung wird auf eine minimale Tastpunktposition geschlossen, welche rechnerisch festgelegt wurde. Ausgehend von dieser minimalen Tastpunktposition wird die Hybridtrennkupplung 4 langsam geschlossen, wobei die Hybridtrennkupplung 4 eine konstante Geschwindigkeit aufweist. Während des Schließens der Hybridtrennkupplung 4 wird weiter das Moment sowohl am Elektromotor 3 als auch am Verbrennungsmotor 2 beobachtet. In dem Moment, in welchem das Moment des Verbrennungsmotors 2 eine vorgegebene Schwelle überschreitet und das Moment des Elektromotors 3 einen ähnlichen Wert anzeigt, wird auf den Tastpunkt geschlossen, wobei eine Wartezeit verkürzt wird, in welcher der Elektromotor 3 seinen stationären Zustand einnehmen kann. Anschließend wird die Hybridtrennkupplung 4 wieder geöffnet und geprüft, ob das Momentniveau des Elektromotors 3 zum Abschluss des Inbetriebnahmevorganges wieder dem Momentenniveau entspricht, welches der Elektromotor 3 zu Beginn der Inbetriebnahme ausgegeben hat.

An diese Inbetriebnahmeroutine, in welcher der Tastpunkt erstmalig ermittelt wird, schließen sich während der Fahrt des Hybridfahrzeuges Adaptionsphasen an, in welchen der so bestimmte Tastpunkt adaptiert wird, um somit einer Veränderung des Tastpunktes durch Verschleiß, Temperatur und ähnlichem Rechnung zu tragen und eine genauere Ansteuerung des Kupplungsaktors 12 zu ermöglichen.

Bei der Tastpunktadaption während der Fahrt des Hybridfahrzeuges wird die Inbetriebnahmeroutine benutzt, welche bei der erstmaligen Inbetriebnahme des Hybridfahrzeuges verwendet wurde. Da durch die Erstinbetriebnahme bereits ein erster Tastpunkt bekannt ist, wird dieser verwendet, um die Hybridtrennkupplung 4 bis kurz vor diese schon bekannte Tastpunktposition zu bewegen. Durch das schnelle Anfahren der Hybridtrennkupplung 4 an die bekannte Tastpunktposition verkürzen sich somit die Zeiten der Tastpunktadaption. Nach Anfahren dieser bekannten Tastpunktposition wird die Hybridtrennkupplung 4 wieder langsam geschlossen und das von dem Elektromotor 3 bzw. dem Verbrennungsmotor 2 ausgegebene Moment beobachtet und in der beschriebenen Art und Weise ausgewertet.

Bei dem erläuterten Verfahren wird durch zusätzliche Auswertung des Verbrennungsmotormomentes die Tastpunktadaption qualitativ signifikant verbessert. Das Moment des Verbrennungsmotors 1 stellt dabei eine redundante Informationsquelle dar, mittels welcher die Genauigkeit der Tastpunktermittlung maßgeblich erhöht und die Dauer durch Eliminieren von Wartezeiten verkürzt wird.

### Bezugszeichenliste

- 1: Antriebsstrang
- 2: Verbrennungsmotor
- 3: Elektromotor
- 4: Hybridtrennkupplung
- 5: Kurbelwelle
- 6: Rotor
- 7: Stator
- 8: Abtriebswelle
- 9: Getriebe
- 10: Antriebsräder
- 11: Getriebesystem
- 12: Hydrostatischer Kupplungsaktor
- 13: Steuergerät
- 14: Leerlaufregler
- 15: Drehzahlsensor
- 16: Drehzahlregler
- 17: Drehzahlsensor

## Patentansprüche

1. Verfahren zur Ermittlung eines Tastpunktes einer Hybridtrennkupplung eines Hybridfahrzeuges, welche von einem hydrostatischen Kupplungsaktor (12) betätigt wird, wobei die Hybridtrennkupplung (4) einen Verbrennungsmotor (2) und einen Elektromotor (3) trennt oder verbindet und der Tastpunkt durch langsames Betätigen der Hybridtrennkupplung (4), ausgehend von einer trennenden Position der Hybridtrennkupplung (4), welche diese in einem unbetätigten Zustand einnimmt, bei einer definierten Momentenreaktion des Elektromotors (3) detektiert wird, **dadurch gekennzeichnet, dass** der Tastpunkt bei laufendem Verbrennungsmotor (2) und unbewegtem Elektromotor (3) adaptiert wird und die Momentenreaktion des Elektromotors (3) mit einer Momentenreaktion des Verbrennungsmotors (2) validiert wird.

2. Verfahren nach Anspruch 1, **dadurch gekennzeichnet, dass** der Elektromotor (3) im Stillstand drehzahlgeregelt wird.

3. Verfahren nach Anspruch 1 oder 2, **dadurch gekennzeichnet, dass** der Verbrennungsmotor (1) auf eine Leerlaufdrehzahl geregelt wird.

4. Verfahren nach Anspruch 1, 2 oder 3, **dadurch gekennzeichnet, dass** während der Adaption des Tastpunktes der Verbrennungsmotor (2) von dem Antriebsstrang (1) abgekoppelt ist.

5. Verfahren nach mindestens einem der vorhergehenden Ansprüche, **dadurch gekennzeichnet, dass** zur Adaption des Tastpunktes während eines Betriebes des Hybridfahrzeuges eine Inbetriebnahmeroutine genutzt wird, mit welcher ein erster Tastpunkt bei einer Inbetriebnahme des Hybridfahrzeuges ermittelt wird, wobei die Hybridtrennkupplung (4) nah an einem vorhergehend bestimmten Tastpunkt herangefahren wird und die Hybridtrennkupplung (4) ausgehend von diesem vorhergehend bestimmten Tastpunkt weiter verschoben wird, bis die definierte Momentenreaktion detektiert wird.

6. Verfahren nach Anspruch 5, **dadurch gekennzeichnet, dass** während der Inbetriebnahme des Hybridfahrzeuges mit der Inbetriebnahmeroutine der erste Tastpunkt der Hybridtrennkupplung (4) ermittelt wird, welcher bei einer ersten Adaption zur Bestimmung des aktuellen Tastpunktes während des Betriebes des Hybridfahrzeuges als vorhergehend bestimmter Tastpunkt zugrunde gelegt wird.

7. Verfahren nach Anspruch 5 oder 6, **dadurch gekennzeichnet, dass** als vorhergehend bestimmter Tastpunkt der zuletzt bestimmte Tastpunkt verwendet wird, welcher in der, der aktuellen Adaptionsphase unmittelbar vorausgehenden Adaptionsphase bestimmt wurde.

8. Verfahren nach mindestens einem der vorhergehenden Ansprüche, **dadurch gekennzeichnet, dass** als Momentenreaktion eine Momentenerhöhung überwacht wird, wobei auf die definierte Momentenerhöhung geschlossen wird, wenn ein vorgegebener Schwellwert der Momentenerhöhung überschritten wird.

## Claims

1. Method for determining a bite point of a hybrid clutch in a hybrid vehicle, which hybrid clutch is operated by a hydrostatic clutch actuator (12), wherein the hybrid clutch (4) separates or connects an internal combustion engine (2) and an electric motor (3), and the bite point is detected by slowly operating the hybrid clutch (4) from a separating position of the hybrid clutch (4), which the latter assumes in a non-operated state, when there is a defined torque reaction of the electric motor (3), **characterized in that** the bite point is adapted when the internal combustion engine (2) is running and the electric motor (3) is stationary, and the torque reaction of the electric motor (3) is validated with a torque reaction of the internal combustion engine (2).

2. Method according to Claim 1, **characterized in that** rotational speed adjustment of the electric motor (3) is performed in the stationary state.

3. Method according to Claim 1 or 2, **characterized in that** the internal combustion engine (1) is adjusted to an idling speed.

4. Method according to Claim 1, 2 or 3, **characterized in that** during the adaptation of the bite point the internal combustion engine (2) is uncoupled from the drive train (1).

5. Method according to at least one of the preceding claims, **characterized in that** an activation routine is used to adapt the bite point during operation of the hybrid vehicle, with which activation routine a first bite point is determined during activation of the hybrid vehicle, wherein the hybrid clutch (4) is made to approach a previously determined bite point, and the hybrid clutch (4) is moved further, starting from this previously determined bite point, until the defined torque reaction is detected.

6. Method according to Claim 5, **characterized in that** during the activation of the hybrid vehicle with the activation routine the first bite point of the hybrid clutch (4) is determined, and a first adaptation process for determining the current bite point while the hybrid vehicle is operating is based on said first bite point as a previously determined bite point.

7. Method according to Claim 5 or 6, **characterized in that** the bite point determined last, which has been determined in the adaptation phase immediately preceding the current adaptation phase, is used as a previously predetermined bite point.

8. Method according to at least one of the preceding claims, **characterized in that** an increase in torque is monitored as a torque reaction, wherein the defined increase in torque is inferred if a predefined threshold value of the increase in torque is exceeded.

## Revendications

1. Procédé permettant de déterminer un point de contact d'un embrayage de coupure hybride d'un véhicule hybride, qui est actionné par un actionneur d'embrayage hydrostatique (12), dans lequel l'embrayage de coupure hybride (4) sépare ou relie un moteur à combustion interne (2) et un moteur électrique (3) et on détecte le point de contact en actionnant lentement l'embrayage de coupure hybride (4), à partir une position de coupure de l'embrayage de coupure hybride (4), que celui-ci occupe dans un état non actionné, par une réaction de couple définie du moteur électrique (3), **caractérisé en ce que** l'on adapte le point de contact avec le moteur à combustion interne (2) tournant et le moteur électrique (3) à l'arrêt, et on valide la réaction de couple du moteur électrique (3) avec une réaction de couple du moteur à combustion interne (2).

2. Procédé selon la revendication 1, **caractérisé en ce que** le moteur électrique (3) est régulé en nombre de tours à l'arrêt.

3. Procédé selon la revendication 1 ou 2, **caractérisé en ce que** l'on régule le moteur à combustion interne (2) sur une vitesse de ralenti.

4. Procédé selon la revendication 1, 2 ou 3, **caractérisé en ce que** le moteur à combustion interne (2) est déconnecté de la chaîne cinématique (1) pendant l'adaptation du point de contact.

5. Procédé selon au moins une des revendications précédentes, **caractérisé en ce que** pour l'adaptation du point de contact pendant un fonctionnement du véhicule hybride, on utilise un programme de mise en service, avec lequel on détermine un premier point de contact lors d'une mise en service du véhicule hybride, dans lequel on approche l'embrayage de coupure hybride (4) tout près d'un point de contact déterminé au préalable et on déplace encore l'embrayage de coupure hybride (4), à partir de ce point de contact déterminé au préalable, jusqu'à ce que l'on détecte la réaction de couple définie.

6. Procédé selon la revendication 5, **caractérisé en ce que** pendant la mise en service du véhicule hybride avec le programme de mise en service, on détermine le premier point de contact de l'embrayage de coupure hybride (4), qui est utilisé comme point de contact déterminé au préalable lors d'une première adaptation pour la détermination du point de contact actuel pendant le fonctionnement du véhicule hybride.

7. Procédé selon la revendication 5 ou 6, **caractérisé en ce que** l'on utilise comme point de contact déterminé au préalable le point de contact déterminé en dernier lieu, qui a été déterminé dans la phase d'adaptation précédant immédiatement la phase d'adaptation actuelle.

8. Procédé selon au moins une des revendications précédentes, **caractérisé en ce que** l'on surveille comme réaction de couple une augmentation de couple, dans lequel on statue sur l'augmentation de couple définie lorsqu'une valeur de seuil prédéterminée de l'augmentation de couple est dépassée.
